(19) Europäisches Patentamt / European Patent Office / Office européen des brevets

(11) **EP 4 388 410 B1**

(12) **EUROPEAN PATENT SPECIFICATION**

(45) Date of publication and mention
of the grant of the patent:
**02.07.2025 Bulletin 2025/27**

(21) Application number: **22765771.5**

(22) Date of filing: **15.08.2022**

(51) International Patent Classification (IPC):
**G06F 7/505** (2006.01)    **G06F 7/53** (2006.01)
**G06F 7/76** (2006.01)

(52) Cooperative Patent Classification (CPC):
**G06F 7/505; G06F 7/5306; G06F 7/764**

(86) International application number:
**PCT/EP2022/072749**

(87) International publication number:
**WO 2023/020984 (23.02.2023 Gazette 2023/08)**

(54) **MASKED SHIFTED ADD OPERATION**

**MASKIERTE VERSCHOBENE ADD-OPERATION**

**OPÉRATION D'ADDITION PAR DÉCALAGE MASQUÉ**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.08.2021 US 202117406158**

(43) Date of publication of application:
**26.06.2024 Bulletin 2024/26**

(73) Proprietor: **International Business Machines
Corporation
Armonk, NY 10504 (US)**

(72) Inventor: **RAO, Rajat
Bangalore 560045 (IN)**

(74) Representative: **Vetter, Svenja
IBM Deutschland GmbH
Patentwesen u. Urheberrecht
Schönaicher Straße 220
71032 Böblingen (DE)**

(56) References cited:
**US-A- 5 909 552**

• **NO ANONYMOUS: "Advanced Micro Devices
AMD64 Technology AMD64 Architecture
Programmer's Manual Volume 4: 128-Bit and
256-Bit Media Instructions", 31 May 2013
(2013-05-31), XP055610695, Retrieved from the
Internet <URL:https://developer.amd.com/
wordpress/media/2012/10/26568_APM_v41.pdf>
[retrieved on 20190802]**

**Description**

BACKGROUND

The present invention generally relates to computer technology and, more specifically, performing arithmetic operations by implementing a masked, shifted add operation.

Computers are typically used for applications that perform arithmetic operations. Several applications like cryptography, Blockchain, machine learning, image processing, computer games, e-commerce, etc., require such operations to be performed efficiently (e.g., fast). Hence, the performance of integer arithmetic has been the focus of both academic and industrial research.

Several existing techniques are used to improve the performance of the computers, particularly processors and/or arithmetic logic units by implementing the arithmetic instructions to take advantage of, or to adapt the calculation process to the architecture of the hardware. Examples of such techniques include splitting an instruction into multiple operations, where each operation is performed in parallel, two or more operations are combined to reduce memory accesses, the operations are ordered so as to reduce memory access time, storing the operands in a particular order to reduce access time, etc. With applications such as cryptography, machine learning, etc., different types of arithmetic operations can be required. There is a need to adapt operations frequently used by such applications to the hardware so that performance of such operations, and in turn, the applications is improved.

The "AMD64 Architecture Programmer's Manual Volume 4", Revision 3.17, published in May 2013, XP055610695, and US 5909552 A are further prior art.

SUMMARY

According to one or more embodiments of the present invention, a computer-implemented method includes receiving, by a processing unit, an instruction to perform a masked shift add operation with a set of operands. The method further includes performing a logical AND operation on a first pair of operands from the set of operands to obtain a first intermediate result. The method further includes shifting the first intermediate result by a first shift amount that is based on a first operand from the first pair of operands. The method further includes performing a logical AND operation on a second pair of operands from the set of operands to obtain a second intermediate result. The method further includes shifting the second intermediate result by a second shift amount that is based on a first operand from the second pair of operands. The method further includes adding the shifted first intermediate result and the shifted second intermediate result. The method further includes outputting, as a result of the masked shift add operation, an output of the adding.

In one or more embodiments of the present invention, the first shift amount is an index of a first non-zero bit in the first operand from the first pair of operands.

In one or more embodiments of the present invention, shifting the first intermediate result by the first shift amount comprises zero-padding the first intermediate result by the first shift amount.

In one or more embodiments of the present invention, shifting the second intermediate result by the second shift amount comprises zero-padding the second intermediate result by the second shift amount.

In one or more embodiments of the present invention, the method further includes updating a carry flag of the processing unit based on a carry resulting from adding the shifted first intermediate result and the shifted second intermediate result.

In one or more embodiments of the present invention, the carry flag is updated based on the instruction received to perform the masked shift add operation.

In one or more embodiments of the present invention, the processing unit performs, in parallel for two or more input values, shifting the first intermediate result and the second intermediate result, and adding the shifted first intermediate result and the second intermediate result. The output of the parallelized operations is the result of the masked shift add operation for the two or more input values.

According to one or more embodiments of the present invention, a system includes a set of registers, and one or more processing units coupled with the set of registers, the one or more processing units are configured to perform a method for performing a masked shift add operation on a set of operands. Performing the masked shift add operation includes performing a logical AND operation on a first pair of operands from the set of operands to obtain a first intermediate result. Performing the masked shift add operation further includes shifting the first intermediate result by a first shift amount that is based on a first operand from the first pair of operands. Performing the masked shift add operation further includes performing a logical AND operation on a second pair of operands from the set of operands to obtain a second intermediate result. Performing the masked shift add operation further includes shifting the second intermediate result by a second shift amount that is based on a first operand from the second pair of operands. Performing the masked shift add operation further includes adding the shifted first intermediate result and the shifted second intermediate result. Performing the masked shift add operation further includes outputting, as a result of the masked shift add operation, an output of the adding.

In one or more embodiments of the present invention, the first shift amount is an index of a first non-zero bit in the first operand from the first pair of operands.

In one or more embodiments of the present invention, shifting the first intermediate result by the first shift amount comprises zero-padding the first intermediate result by the first shift amount.

In one or more embodiments of the present invention, shifting the second intermediate result by the second shift amount comprises zero-padding the second intermediate result by the second shift amount.

In one or more embodiments of the present invention, the method further includes updating a carry flag based on a carry resulting from adding the shifted first intermediate result and the shifted second intermediate result.

In one or more embodiments of the present invention, the carry flag is updated based on an instruction received to perform the masked shift add operation.

In one or more embodiments of the present invention, the set of operands are provided in the set of registers.

According to one or more embodiments of the present invention, a computer program product includes a computer-readable memory that has computer-executable instructions stored thereupon, the computer-executable instructions when executed by a processor cause the processor to perform a method for performing an arithmetic operation using masked shift add operations in parallel. Performing each masked shift add operation on a set of operands includes receiving an instruction to perform a masked shift add operation with a set of operands. Performing each masked shift add operation further includes performing a logical AND operation on a first pair of operands from the set of operands to obtain a first intermediate result. Performing each masked shift add operation further includes shifting the first intermediate result by a first shift amount that is based on a first operand from the first pair of operands. Performing each masked shift add operation further includes performing a logical AND operation on a second pair of operands from the set of operands to obtain a second intermediate result. Performing each masked shift add operation further includes shifting the second intermediate result by a second shift amount that is based on a first operand from the second pair of operands. Performing each masked shift add operation further includes adding the shifted first intermediate result and the shifted second intermediate result. Performing each masked shift add operation further includes outputting, as a result of the masked shift add operation, an output of the adding.

In one or more embodiments of the present invention, the first shift amount is an index of a first non-zero bit in the first operand from the first pair of operands.

In one or more embodiments of the present invention, shifting the first intermediate result by the first shift amount comprises zero-padding the first intermediate result by the first shift amount.

In one or more embodiments of the present invention, shifting the second intermediate result by the second shift amount comprises zero-padding the second intermediate result by the second shift amount.

In one or more embodiments of the present invention, performing the operation further includes, updating a carry flag based on a carry resulting from adding the shifted first intermediate result and the shifted second intermediate result.

In one or more embodiments of the present invention, the operands are provided in registers.

According to one or more embodiments of the present invention a computer processor includes a set of registers, and an instruction execution unit configured to execute a masked shift add instruction on a set of operands. The execution includes performing logical AND operation on a first pair of operands to obtain a first intermediate result. The execution further includes shifting the first intermediate result by a first shift amount that is based on a first operand from the first pair of operands. The execution further includes performing logical AND operation on a second pair of operands to obtain a second intermediate result. The execution further includes shifting the second intermediate result by a second shift amount that is based on a first operand from the second pair of operands. The execution further includes adding the shifted first intermediate result and the shifted second intermediate result. The execution further includes outputting, as a result of the masked shift add operation, an output of the adding.

In one or more embodiments of the present invention, the first pair of operands and the second pair of operands are processed in parallel.

In one or more embodiments of the present invention, the operands are provided in the set of registers.

According to one or more embodiments of the present invention, a computer-implemented method for an arithmetic operation includes splitting, by a processing unit, two input values of the arithmetic operation into separate portions and performing, in parallel, a masked shift add operation with two corresponding portions from the two input values being used as part of a set of operands of the masked shift add operation. Performing each masked shift add operation includes performing logical AND operation on a first pair of operands to obtain a first intermediate result. Performing each masked shift add operation further includes shifting the first intermediate result by a first shift amount that is based on a first operand from the first pair of operands. Performing each masked shift add operation further includes performing logical AND operation on a second pair of operands to obtain a second intermediate result. Performing each masked shift add operation further includes shifting the second intermediate result by a second shift amount that is based on a first operand from the second pair of operands. Performing each masked shift add operation further includes adding the shifted first intermediate result and the shifted second intermediate result. Performing each masked shift add operation further includes outputting, as a result of the masked shift add operation, an output of the adding.

In one or more embodiments of the present invention, the first pair of operands and the second pair of operands are processed in parallel.

The above-described features can also be provided at least by a system, a computer program product, and a machine, among other types of implementations.

Embodiments of the present invention provide technical solutions to facilitate a processor that can implement instructions (e.g., *add_ms, add_msc*) to perform a masked shift addition in a reduced time compared to existing techniques. Embodiments of the present invention improve the time requirement by facilitating the execution of the masked, shifted add instruction with reduced dependencies across iterations. The dependencies are reduced, in one or more embodiments of the present invention, by encoding a shift amount into a mask where the shift is the index of the non-zero bit in the mask. Further, embodiments of the present invention facilitate exploiting this instruction to perform a carry ripple operation and reduce the number of carry bits in a reduced radix representation to a single bit (table 2).

Additional technical features and benefits are realized through the techniques of the present invention. Embodiments and aspects of the invention are described in detail herein and are considered a part of the claimed subject matter. For a better understanding, refer to the detailed description and to the drawings.

BRIEF DESCRIPTION OF THE DRAWINGS

The specifics of the exclusive rights described herein are particularly pointed out and distinctly claimed in the claims at the conclusion of the specification. The foregoing and other features and advantages of the embodiments of the invention are apparent from the following detailed description taken in conjunction with the accompanying drawings in which:

FIG. 1 provides a visual depiction of the technical challenge addressed by one or more embodiments of the present invention;

FIG. 2 depicts a flowchart of a method to perform a masked shift add operation according to one or more embodiments of the present invention;

FIG. 3 depicts a method for determining a shift amount according to one or more embodiments of the present invention;

FIG. 4 depicts the operation being performed on the values in registers of a processor according to one or more embodiments of the present invention;

FIG. 5 depicts a block diagram of a comparison of an addition operation being performed using existing techniques and according to one or more embodiments of the present invention;

FIG. 6 depicts a block diagram of a processor according to one or more embodiments of the present invention; and

FIG. 7 depicts a computing system according to one or more embodiments of the present invention.

The diagrams depicted herein are illustrative. There can be many variations to the diagrams or the operations described therein. For instance, the actions can be performed in a differing order or actions can be added, deleted or modified. Also, the term "coupled" and variations thereof describe having a communications path between two elements and do not imply a direct connection between the elements with no intervening elements/connections between them. All of these variations are considered a part of the specification.

In the accompanying figures and following detailed description of the disclosed embodiments, the various elements illustrated in the figures are provided with two or three-digit reference numbers. With minor exceptions, the leftmost digit(s) of each reference number corresponds to the figure in which its element is first illustrated.

DETAILED DESCRIPTION

Technical solutions are described herein to improve the efficiency of a computer processor by facilitating performance of a masked, shifted add operation. In computer systems the arithmetic operations of addition and multiplication are used frequently.

Computer systems typically use binary number representation when performing arithmetic operations. Further, the computer system, and particularly a processor and an arithmetic logic unit (ALU) of the processor, have a predefined "width" or "word size" (w), for example, 32-bit, 64-bit, 128-bit, etc. The width indicates a maximum number of bits the processor can process at one time. The width of the processor can be dictated by the size of registers, the size of the ALU processing width, or any other such processing limitation of a component associated with the processor.

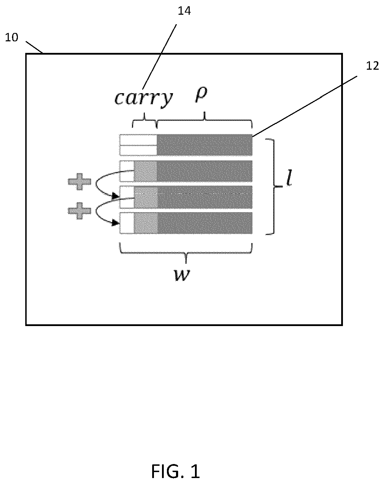

A technical challenge exists when the processors are performing addition and multiplication operations with a reduced radix representation. FIG. 1 provides a visual depiction of the technical challenge addressed by one or more embodiments of the present invention. Let $p$ be an n-bit number and w be the word size of a processor 10, where the arithmetic operations are to be performed on $p$. At this time, the processor 10 has to decide a radix $\rho \in \mathbb{R}$ such that $0 < \rho < w$ and define $l = n/\rho$. Here, $l$ is the number of registers 12 (or memory locations) that will be required for the arithmetic operation. In some cases "$l$" is referred to as a "number limbs." At this time, an element $a \in \mathbb{F}_p$ is represented by a sequence of integer digits $A=(a_0, \ldots a_{l-1})$ such that: $a \equiv \sum_{i=0}^{l-1} 2^{\lceil i\rho \rceil} a_i \bmod p$ and $0 \leq a_i < 2^{\lceil (i+1)\rho \rceil - \lceil i\rho \rceil}$.

Selecting the value for $\rho$ is cumbersome and introduces implementation tradeoffs. Selecting $\rho$ smaller than the word size of the processor provides an advantage that the carry bits from accumulating partial products would fit into the word. However, rippling the carry bits from one partial product to the next requires a sequence of instructions and is a bottleneck. Also, the multiplication is performed on $\rho$ bits, so $\rho$ has to be chosen in such a way that the native hardware multipliers (e.g., ALU) can handle at least $\rho$ bits. In most processors, the floating point multipliers are used for integer multiplication as well leading to hardware multipliers supporting smaller bit-width than the word size, for example, 56-bit multiplier on a 64-bit machine.

For example, consider that a multiplication operation is to be performed for $p$. After performing a multiplication, there will be an accumulation of carry bits 14 in each word that is stored in each register 12. The carry bits 14 need to be added into the subsequent word so that each "limb" is back to $\rho$ bits. In existing processors, a "ripple-carry" operation is performed starting from the least significant word going to the most significant word to propagate the carry bits 14. While this operation needs to be performed sequentially, the data dependency between the words means that the operation on one word can start only after the previous word's carry bits 14 have been added and the result of that addition is available.

Embodiments of the present invention provide technical solutions to address such technical challenges. Embodiments of the present invention facilitate performing an operation to propagate the carry bits 14 in sequence with reduced data dependency between words. Consequently, the carry propagation operations can be issued one after another without having to wait for the result of the previous word's ripple operation in one or more embodiments of the present invention. Embodiments of the present invention, accordingly, improve the operation of the processor, and hence, provide an improvement to computing technology.

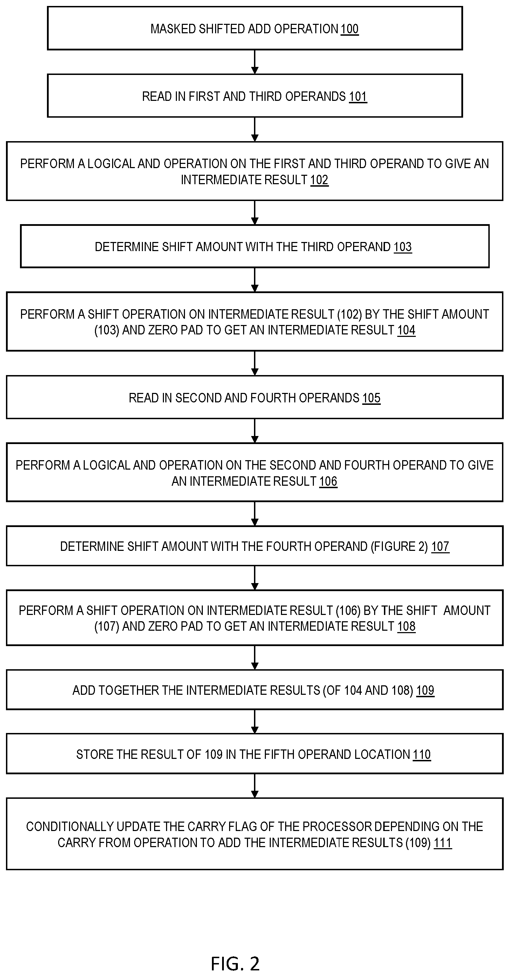

FIG. 2 depicts a flowchart of a method to perform a masked shift add operation according to one or more embodiments of the present invention. The method includes receiving an instruction to perform the masked shift add operation, at block 100. For example, the instruction can be represented as *"add_ms, a, b, c, d, e,"* where the operands *a, b, c, d, e* are registers 12 in the processor 10. Another variation of the instruction can be *"add_msc, a, b, c, d, e."* In this case, the carry bit is added and the carry-out from the addition is stored into the carry bit/flag (not shown) of the processor 10.

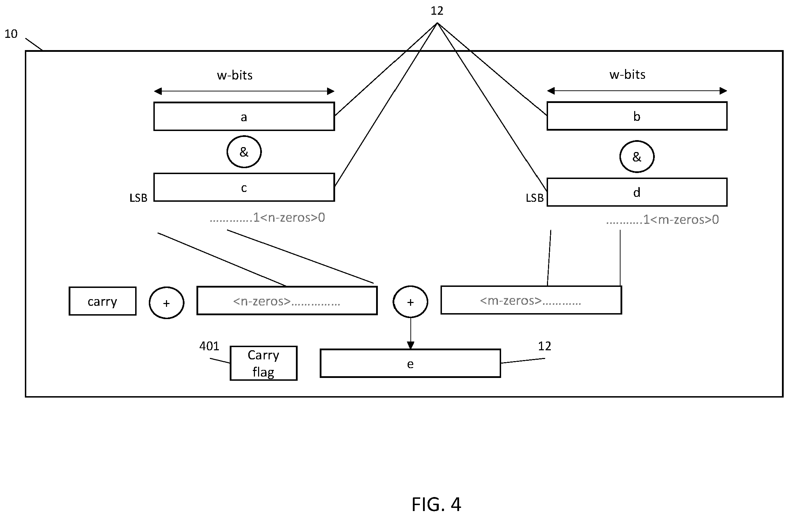

The result of the instruction is $e = [(a \,\&\, c) >> c\_first\_one] + [(b \,\&\, d) >> d\_first\_one]$, where *c_first one* is the index of the first non-zero bit in c counting from the least significant bit, and *d_first_one* is the index of the first non-zero bit in d counting from the least significant bit. FIG. 4 depicts the operation being performed on the values in registers 12 of the processor 10 according to one or more embodiments of the present invention.

It is understood that the name of the instruction, the operands used, and the format of the instruction can vary in other embodiments of the present invention. Further, it is understood that in other embodiments of the present invention, the operands can be provided in a different manner such as, memory locations, direct values, address pointers, etc. Further, embodiments of the present invention are described herein with the operands in a particular order, however, in other embodiments of the present invention, the order of the operands can be different.

At block 101, the processor 10 reads the first and third operands, registers *a* and c 12. At block 102, the processor 10 performs a logical and operation (&) on the first and third operands, which is stored as an intermediate result. At block 103, the processor 10 determines a shift amount with the third operand, register *c* 12.

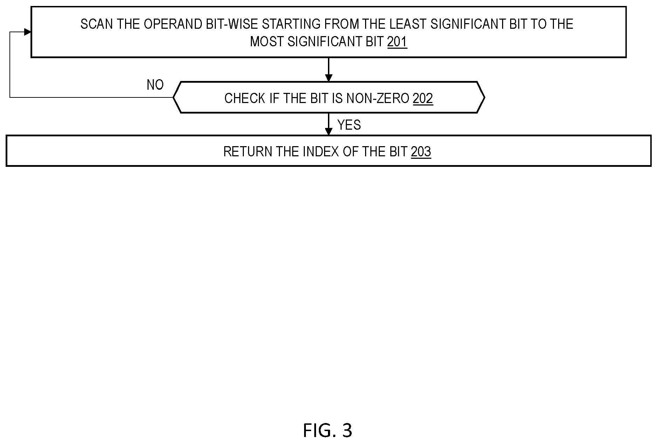

FIG. 3 depicts a method for determining a shift amount according to one or more embodiments of the present invention. At block 201, the processor 10 scans the operand bit-wise starting from the least significant bit (LSB) to the most significant bit (MSB). It should be noted that in some embodiments the LSB may be assigned index 0, while in some embodiments the MSB may be assigned index 0. The operand can be a register 12, a memory location, a direct value, or any other type of input that specifies an input value on which the shift amount is based. For each bit encountered from the LSB to the most significant bit (MSB) of the operand, at block 202, the processor 10 checks if the bit is non-zero (i.e., one). The check for the non-zero bit (at block 203) continues until a non-zero bit is encountered (at block 204), or until all the bits of the input value are checked. The index of the first non-zero bit is determined, at block 204. In the case where the operand is zero, the zero value is output.

Referring back to the flowchart of the method in FIG. 2, once the shift amount is determined (block 103) using the third operand, *c*, at block 104, the processor 10 performs a shift operation on the intermediate result by the shift amount and zero pads the result to get another (second) intermediate result.

At block 105, the processor 10 reads the second and fourth operands, *b* and *d*. At block 106, the processor 10 performs a logical and operation (&) on the second and fourth operands, which is stored as an intermediate (third) result. At block 107, the processor 10 determines a (second) shift amount with the fourth operand, *d*. The shift amount is determined using the same technique described in FIG. 3. Further, at block 108, the processor 10 performs a shift operation on the (third) intermediate result by the (second) shift amount and zero pads the result to get another (fourth) intermediate result.

At block 109, the processor 10 adds together the second and fourth intermediate results (from blocks 104 and 108). The result of the addition is stored in the fifth operand, *e,* at block 110.

At block 111, in the case the carry bit is to be recorded, the processor 10, updates the carry flag 401 depending on the carry from addition operation of the second and fourth intermediate results (at block 109).

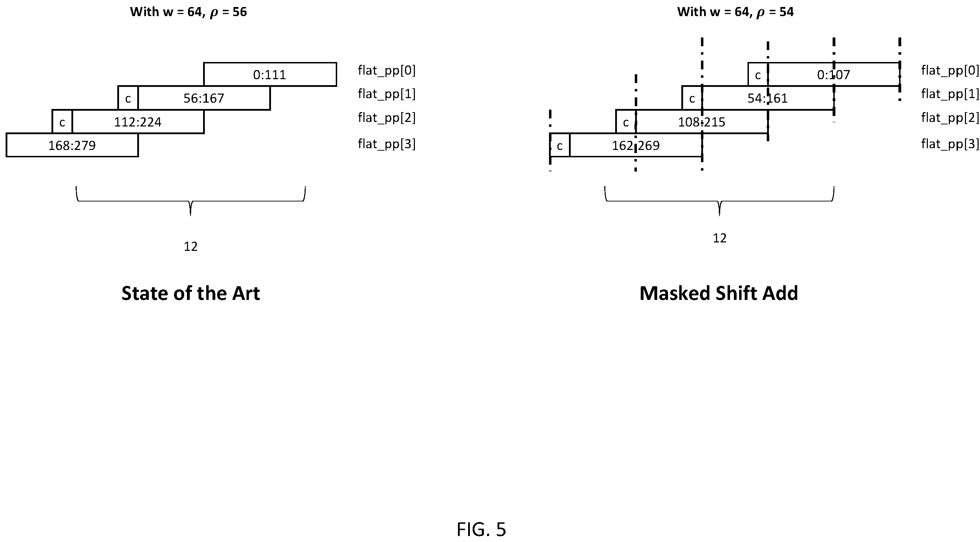

Performing the addition in this manner reduces the time required to obtain the result in comparison to existing techniques. FIG. 5 depicts a block diagram of a comparison of an addition operation being performed using existing techniques and according to one or more embodiments of the present invention. For the comparison, consider the state-of-the-art that uses word size w = 64, and radix $\rho$ = 56. The addition is performed using pseudocode/algorithm depicted in Table 1. In summary, the addition is performed by the state-of-the-art techniques by 1: generating partial products which overflow the radix 56 bits but fit into the overall word; 2: starting from the least significant word, the carry bits are selected as the bits in the word overflowing the radix; 3: the carry bits are added into the subsequent word; and 4: the steps 2, 3 above are repeated for all partial products.

Table 1

```
1   for(i=0;i<=3;i++)
2   {
3     // Retire CHUNK_SIZE bits
4     vec_store_len_r(flat_pp[i], &c[i], (CHUNK_SIZE/8)-1);
5     c[i] = c[i]>>8;
6     // Accumulate the remainder into the next partial product
7     // Implements: flat_pp[i+1] = flat_pp[i+1] + (flat_pp[i] >> CHUNK_SIZE);
8     flat_pp[i] = vec_sld(zero_vector, flat_pp[i], (128-CHUNK_SIZE)/8);
9     if(i==3))
10    {
11      vec_store_len_r(flat_pp[i], &c[i+1], (CHUNK_SIZE/8)-1);
12      c[i+1] = c[i+1]>>8;
13    }
14    else
15    {
16      flat_pp[i+1] = vec_add_u128(flat_pp[i+1], flat_pp[i]);
17    }
18  }
```

As can be seen, there is dependency between instructions in a single iteration and across iterations (e.g., lines 4 and 5 in subsequent iterations depend on result of line 16 in previous iterations). The steps 3 and 4 in one iteration (see earlier paragraph) need to complete before starting the next iteration.

As described further, this latency component in a single iteration, and across iterations is reduced, and in some cases eliminated, according to one or more embodiments of the present invention.

Consider that the masked shift add operation according to one or more embodiments of the present invention uses word size w = 64, Radix $\rho$ = 54. The execution of the instruction can be represented as pseudo-code/algorithm shown in Table 2.

Table 2

| 1 | vec_store_len_r(flat_pp[0], &c[0], (CHUNK_SIZE/8)-1); |
|---|---|
| 2 | for(i=3;i>=0;i--) |
| 3 | { |
| 4 |   if(i!=0) |
| 5 |     add_ms flat_pp[i], flat_pp[i-1], MASK_54_107, MASK_108_127, c[i+1]; |
| 6 |   if(i!=3) |
| 7 |     add_ms c[i+1], flat_pp[i+1], MASK_0_54, MASK_0_53, c[i+1]; |
| 8 | } |

As described herein, partial products, which overflow the radix 54 bits, but fit into the overall word, are generated. Starting from the most significant word, the processor performs *add_ms pp[i], pp[i-1], MASK_54_107, MASK_108_127, res[i], where MASK_54_127* = Zeros in bits 0:53, ones in bits 54:107, zeroes in 108:127; and *MASK_108_127* = Zeros in bits 0:107, ones in bits 108:127. This step is repeated for all partial products.

Embodiments of the present invention combine into a single instruction steps 3 and 4 from the state-of-the-art technique above. Further, once step 3 issues the instruction for one iteration, the next iteration's instruction can happen immediately in the next clock without waiting for completion of the previous iteration. In summary, with the masked shift add operation according to one or more embodiments of the present invention, the dependency is limited to instructions in a single iteration. Because there is no dependency across iterations, the loop can be unrolled to reduce the time required to obtain the result.

Embodiments of the present invention provide, for example, in the case of a 256-bit multiplication, a 40% improvement; and in case of a 2048-bit multiplication, a 25% improvement over the existing techniques. Further improvements can be gained by maintaining the processor 10 in the redundant reduced radix form if a subsequent operation is also a multiplication.

Accordingly, embodiments of the present invention provide technical solutions to facilitate a processor that can implement instructions (e.g., *add_ms, add_msc*) to perform a masked shift addition in a reduced time compared to existing techniques. Embodiments of the present invention improve the time requirement by facilitating the execution of the masked, shifted add instruction with reduced dependencies across iterations. The dependencies are reduced, in one or more embodiments of the present invention, by encoding a shift amount into a mask where the shift is the index of the non-zero bit in the mask. Further, embodiments of the present invention facilitate exploiting this instruction to perform a carry ripple operation and reduce the number of carry bits in a reduced radix representation to a single bit (table 2).

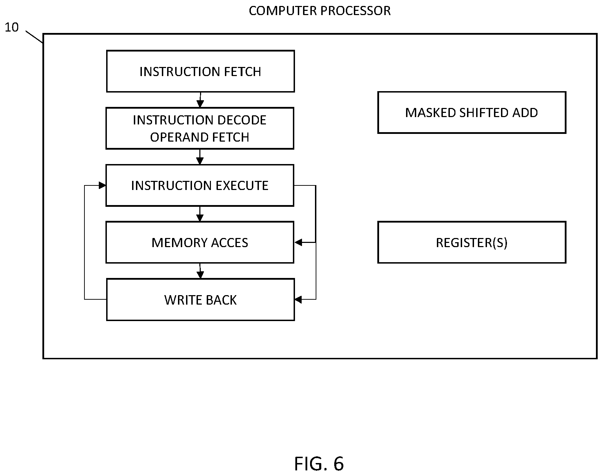

FIG. 6 depicts a block diagram of a processor according to one or more embodiments of the present invention. The processor 10 can include, among other components, an instruction fetch unit 601, an instruction decode operand fetch unit 602, an instruction execution unit 603, a memory access unit 604, a write back unit 605, a set of registers 12, and a masked shift add executor 606. In one or more embodiments of the present invention, the masked shift add executor 606 can be part of an arithmetic logic unit (ALU) (not shown).

In one or more embodiments of the present invention, the processor 10 can be one of several computer processors in a processing unit, such as a central processing unit (CPU), a graphics processing unit (GPU), a tensor processing unit (TPU), or any other processing unit of a computer system. Alternatively, or in addition, the processor 10 can be a computing core that is part of one or more processing units.

The instruction fetch unit 601 is responsible for organizing program instructions to be fetched from memory, and executed, in an appropriate order, and for forwarding them to the instruction execution unit 603. The instruction decode operand fetch unit 602 facilitates parsing the instruction and operands, e.g., address resolution, pre-fetching, prior to forwarding an instruction to the instruction execution unit 603. The instruction execution unit 603 performs the operations and calculations as per the instruction. The memory access unit 604 facilitates accessing specific locations in a memory device that is coupled with the processor 10. The memory device can be a cache memory, a volatile memory, a nonvolatile memory, etc. The write back unit 605 facilitates recording contents of the registers 12 to one or more locations in the memory device. The masked shift add executor 606 facilitates executing the masked shift add instruction as described herein.

It should be noted that the components of the processors can vary in one or more embodiments of the present invention without affecting the features of the technical solutions described herein. In some embodiments of the present invention, the components of the processor 10 can be combined, separated, or different from those described herein.

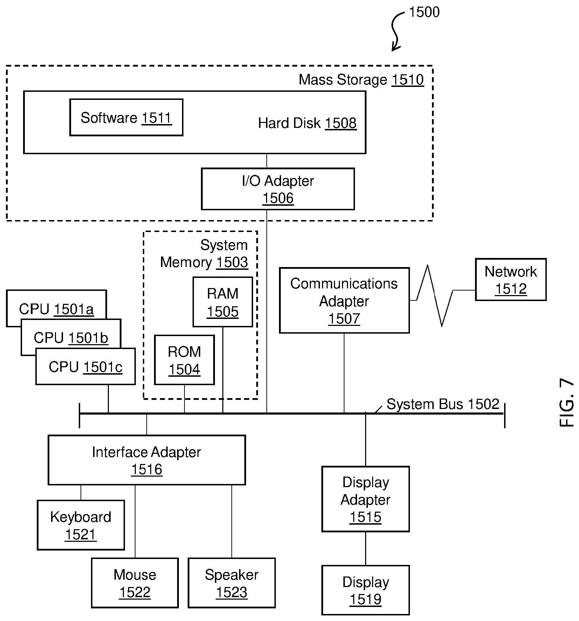

Turning now to FIG. 7, a computer system 1500 is generally shown in accordance with an embodiment. The computer system 1500 can be a target computing system being used to perform one or more functions that require a masked shift add operation to be performed. The computer system 1500 can be an electronic, computer framework comprising and/or employing any number and combination of computing devices and networks utilizing various communication technologies, as described herein. The computer system 1500 can be easily scalable, extensible, and modular, with the ability to change to different services or reconfigure some features independently of others. The computer system 1500 may be, for example, a server, desktop computer, laptop computer, tablet computer, or smartphone. In some examples, computer system 1500 may be a cloud computing node. Computer system 1500 may be described in the general context of computer system executable instructions, such as program modules, being executed by a computer system. Generally, program modules may include routines, programs, objects, components, logic, data structures, and so on that perform particular tasks or implement particular abstract data types. Computer system 1500 may be practiced in distributed cloud computing environments where tasks are performed by remote processing devices that are linked through a communications network. In a distributed cloud computing environment, program modules may be located in both local and remote computer system storage media including memory storage devices.

As shown in FIG. 7, the computer system 1500 has one or more central processing units (CPU(s)) 1501a, 1501b, 1501c, etc. (collectively or generically referred to as processor(s) 1501). The processors 1501 can be a single-core processor, multi-core processor, computing cluster, or any number of other configurations. The processors 1501, also referred to as processing circuits, are coupled via a system bus 1502 to a system memory 1503 and various other components. The system memory 1503 can include a read only memory (ROM) 1504 and a random access memory (RAM) 1505. The ROM 1504 is coupled to the system bus 1502 and may include a basic input/output system (BIOS), which controls certain basic functions of the computer system 1500. The RAM is read-write memory coupled to the system bus 1502 for use by the processors 1501. The system memory 1503 provides temporary memory space for operations of said instructions during operation. The system memory 1503 can include random access memory (RAM), read only memory, flash memory, or any other suitable memory systems.

The computer system 1500 comprises an input/output (I/O) adapter 1506 and a communications adapter 1507 coupled to the system bus 1502. The I/O adapter 1506 may be a small computer system interface (SCSI) adapter that communicates with a hard disk 1508 and/or any other similar component. The I/O adapter 1506 and the hard disk 1508 are collectively referred to herein as a mass storage 1510.

Software 1511 for execution on the computer system 1500 may be stored in the mass storage 1510. The mass storage 1510 is an example of a tangible storage medium readable by the processors 1501, where the software 1511 is stored as instructions for execution by the processors 1501 to cause the computer system 1500 to operate, such as is described herein below with respect to the various Figures. Examples of computer program product and the execution of such instruction is discussed herein in more detail. The communications adapter 1507 interconnects the system bus 1502 with a network 1512, which may be an outside network, enabling the computer system 1500 to communicate with other such systems. In one embodiment, a portion of the system memory 1503 and the mass storage 1510 collectively store an operating system, which may be any appropriate operating system, such as the z/OS or AIX operating system from IBM Corporation, to coordinate the functions of the various components shown in FIG. 7.

Additional input/output devices are shown as connected to the system bus 1502 via a display adapter 1515 and an interface adapter 1516 and. In one embodiment, the adapters 1506, 1507, 1515, and 1516 may be connected to one or more I/O buses that are connected to the system bus 1502 via an intermediate bus bridge (not shown). A display 1519 (e.g., a screen or a display monitor) is connected to the system bus 1502 by a display adapter 1515, which may include a graphics controller to improve the performance of graphics intensive applications and a video controller. A keyboard 1521, a mouse 1522, a speaker 1523, etc. can be interconnected to the system bus 1502 via the interface adapter 1516, which may include, for example, a Super I/O chip integrating multiple device adapters into a single integrated circuit. Suitable I/O buses for connecting peripheral devices such as hard disk controllers, network adapters, and graphics adapters typically include common protocols, such as the Peripheral Component Interconnect (PCI). Thus, as configured in FIG. 7, the computer system 1500 includes processing capability in the form of the processors 1501, and, storage capability including the system memory 1503 and the mass storage 1510, input means such as the keyboard 1521 and the mouse 1522, and output capability including the speaker 1523 and the display 1519.

In some embodiments, the communications adapter 1507 can transmit data using any suitable interface or protocol, such as the internet small computer system interface, among others. The network 1512 may be a cellular network, a radio network, a wide area network (WAN), a local area network (LAN), or the Internet, among others. An external computing device may connect to the computer system 1500 through the network 1512. In some examples, an external computing device may be an external webserver or a cloud computing node.

It is to be understood that the block diagram of FIG. 7 is not intended to indicate that the computer system 1500 is to include all of the components shown in FIG. 7. Rather, the computer system 1500 can include any appropriate fewer or additional components not illustrated in FIG. 7 (e.g., additional memory components, embedded controllers, modules, additional network interfaces, etc.). Further, the embodiments described herein with respect to computer system 1500 may be implemented with any appropriate logic, wherein the logic, as referred to herein, can include any suitable hardware (e.g., a processor, an embedded controller, or an application specific integrated circuit, among others), software (e.g., an application, among others), firmware, or any suitable combination of hardware, software, and firmware, in various embodiments.

The present invention may be a system, a method, and/or a computer program product at any possible technical detail level of integration. The computer program product may include a computer-readable storage medium (or media) having computer-readable program instructions thereon for causing a processor to carry out aspects of the present invention.

The computer-readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions for carrying out operations of the present invention may be assembler instructions, instruction-set-architecture (ISA) instructions, machine instructions, machine-dependent instructions, microcode, firmware instructions, state-setting data, configuration data for integrated circuitry, or either source-code or object code written in any combination of one or more programming languages, including an object-oriented programming language such as Smalltalk, C++, or the like, and procedural programming languages, such as the "C" programming language or similar programming languages. The computer-readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer-readable program instruction by utilizing state information of the computer-readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer-readable program instructions may also be loaded onto a computer, other programmable data processing apparatus, or other device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The descriptions of the various embodiments of the present invention have been presented for purposes of illustration, but are not intended to be exhaustive or limited to the embodiments disclosed. Many modifications and variations will be apparent to those of ordinary skill in the art. The terminology used herein was chosen to best explain the principles of the embodiments, the practical application or technical improvement over technologies found in the marketplace, or to enable others of ordinary skill in the art to understand the embodiments described herein.

**Claims**

1.  A computer-implemented method comprising:

    receiving, by a processing unit (1501), an instruction to perform a masked shift add operation with a set of operands;
    performing a logical AND operation on a first pair of operands from the set of operands to obtain a first intermediate result;
    shifting the first intermediate result by a first shift amount that is based on a first operand from the first pair of operands;
    **characterised by**
    performing a logical AND operation on a second pair of operands from the set of operands to obtain a second intermediate result;
    shifting the second intermediate result by a second shift amount that is based on a first operand from the second pair of operands;
    adding the shifted first intermediate result and the shifted second intermediate result; and
    outputting, as a result of the masked shift add operation, an output of the adding.

2.  The computer-implemented method of claim 1, wherein the first shift amount is an index of a first non-zero bit in the first operand from the first pair of operands and/or, wherein shifting the first intermediate result by the first shift amount comprises zero-padding the first intermediate result by the first shift amount.

3.  The computer-implemented method of any one of the preceding claims, wherein shifting the second intermediate result by the second shift amount comprises zero-padding the second intermediate result by the second shift amount.

4.  The computer-implemented method of any one of the preceding claims, further comprising, updating a carry flag (401) of the processing unit (1501) based on a carry resulting from adding the shifted first intermediate result and the shifted second intermediate result, wherein the carry flag (401) is updated based on the instruction received to perform the masked shift add operation.

5.  The computer-implemented method of any one of the preceding claims, wherein:

the processing unit (1501) performs, in parallel for two or more input values, shifting the first intermediate result and the second intermediate result, and adding the shifted first intermediate result and the second intermediate result; and

the output of the parallelized operations is the result of the masked shift add operation for the two or more input values.

6. A system comprising:

a set of registers (12); and

one or more processing units (1501) coupled with the set of registers (12), the one or more processing units (1501) are configured to perform a method for performing a masked shift add operation on a set of operands, wherein performing the masked shift add operation comprises:

performing a logical AND operation on a first pair of operands from the set of operands to obtain a first intermediate result;

shifting the first intermediate result by a first shift amount that is based on a first operand from the first pair of operands;

**characterised by**

performing a logical AND operation on a second pair of operands from the set of operands to obtain a second intermediate result;

shifting the second intermediate result by a second shift amount that is based on a first operand from the second pair of operands;

adding the shifted first intermediate result and the shifted second intermediate result; and

outputting, as a result of the masked shift add operation, an output of the adding.

7. The system of claim 6, wherein the first shift amount is an index of a first non-zero bit in the first operand from the first pair of operands and/or wherein shifting the first intermediate result by the first shift amount comprises zero-padding the first intermediate result by the first shift amount.

8. The system of any one of the claims 6 to 7, wherein shifting the second intermediate result by the second shift amount comprises zero-padding the second intermediate result by the second shift amount.

9. The system of any one of the claims 6 to 8, further comprising, updating a carry flag (401) based on a carry resulting from adding the shifted first intermediate result and the shifted second intermediate result, , wherein the carry flag (401) is updated based on an instruction received to perform the masked shift add operation.

10. The system of any one of the claims 6 to 9, wherein the set of operands are provided in the set of registers (12).

11. A computer program product comprising a computer-readable memory that has computer-executable instructions stored thereupon, the computer-executable instructions when executed by a processor (10) cause the processor (10) to perform a method for performing an arithmetic operation using masked shift add operations in parallel, wherein performing each masked shift add operation on a set of operands comprises:

receiving an instruction to perform a masked shift add operation with a set of operands;

performing a logical AND operation on a first pair of operands from the set of operands to obtain a first intermediate result;

shifting the first intermediate result by a first shift amount that is based on a first operand from the first pair of operands;

**characterised by**

performing a logical AND operation on a second pair of operands from the set of operands to obtain a second intermediate result;

shifting the second intermediate result by a second shift amount that is based on a first operand from the second pair of operands;

adding the shifted first intermediate result and the shifted second intermediate result; and

outputting, as a result of the masked shift add operation, an output of the adding.

12. A computer processor (10) comprising:

a set of registers (12); and
an instruction execution unit (603) configured to execute a masked shift add instruction on a set of operands, the execution comprising:

performing logical AND operation on a first pair of operands to obtain a first intermediate result;
shifting the first intermediate result by a first shift amount that is based on a first operand from the first pair of operands;
**characterised by**

performing logical AND operation on a second pair of operands to obtain a second intermediate result;

shifting the second intermediate result by a second shift amount that is based on a first operand from the second pair of operands;
adding the shifted first intermediate result and the shifted second intermediate result; and
outputting, as a result of the masked shift add operation, an output of the adding.

13. The computer processor (10) of claim 12, wherein the first pair of operands and the second pair of operands are processed in parallel and/or , wherein the operands are provided in the set of registers (12).

14. A computer-implemented method for an arithmetic operation, the method comprising:

splitting, by a processing unit (1501), two input values of the arithmetic operation into separate portions and performing, in parallel, a masked shift add operation with two corresponding portions from the two input values being used as part of a set of operands of the masked shift add operation, wherein performing each masked shift add operation comprises:

performing logical AND operation on a first pair of operands to obtain a first intermediate result;
shifting the first intermediate result by a first shift amount that is based on a first operand from the first pair of operands;
**characterised by**

performing logical AND operation on a second pair of operands to obtain a second intermediate result;

shifting the second intermediate result by a second shift amount that is based on a first operand from the second pair of operands;
adding the shifted first intermediate result and the shifted second intermediate result; and
outputting, as a result of the masked shift add operation, an output of the adding.

15. The computer-implemented method of claim 14, wherein the first pair of operands and the second pair of operands are processed in parallel.


**Patentansprüche**

1. Computerrealisiertes Verfahren, das aufweist:

Empfangen einer Anweisung zum Durchführen einer maskierten Verschiebe-Addier-Operation mit einem Satz von Operanden durch eine Verarbeitungseinheit (1501);
Durchführen einer logischen AND-Operation auf einem ersten Paar von Operanden aus dem Satz von Operanden zum Erhalten eines ersten Zwischenergebnisses;
Verschieben des ersten Zwischenergebnisses um einen ersten Verschiebungsbetrag beruhend auf einem ersten Operanden aus dem ersten Paar von Operanden;
**gekennzeichnet durch**
Durchführen einer logischen AND-Operation auf einem zweiten Paar von Operanden aus dem Satz von Operanden zum Erhalten eines zweiten Zwischenergebnisses;
Verschieben des zweiten Zwischenergebnisses um einen zweiten Verschiebungsbetrag, der auf einem ersten Operanden aus dem zweiten Paar von Operanden beruht;

Addieren des verschobenen ersten Zwischenergebnisses und des verschobenen zweiten Zwischenergebnisses; und

Ausgeben einer Ausgabe des Addierens als ein Ergebnis der maskierten Verschiebe-Addier-Operation.

2. Computerrealisiertes Verfahren nach Anspruch 1, wobei es sich bei dem ersten Verschiebungsbetrag um einen Index eines ersten von null verschiedenen Bit in dem ersten Operanden aus dem ersten Paar von Operanden handelt und/oder wobei das Verschieben des ersten Zwischenergebnisses um den ersten Verschiebungsbetrag ein Null-Padding des ersten Zwischenergebnisses um den ersten Verschiebungsbetrag aufweist.

3. Computerrealisiertes Verfahren nach einem der vorangehenden Ansprüche, wobei das Verschieben des zweiten Zwischenergebnisses um den zweiten Verschiebungsbetrag das Null-Padding des zweiten Zwischenergebnisses um den zweiten Verschiebungsbetrag aufweist.

4. Computerrealisiertes Verfahren nach einem der vorangehenden Ansprüche, das ferner das Aktualisieren einer Übertrag-Markierung (401) der Verarbeitungseinheit (1501) auf der Grundlage eines Übertrags aufweist, der aus dem Addieren des verschobenen ersten Zwischenergebnisses und des verschobenen zweiten Zwischenergebnisses resultiert, wobei die Übertrag-Markierung (401) auf der Grundlage der Anweisung aktualisiert wird, die zum Durchführen der maskierten Verschiebe-Addier-Operation empfangenen wird.

5. Computerrealisiertes Verfahren nach einem der vorangehenden Ansprüche, wobei:

    die Verarbeitungseinheit (1501) das Verschieben des ersten Zwischenergebnisses und des zweiten Zwischenergebnisses parallel für zwei oder mehrere Eingabewerte durchführt und das erste verschobene Zwischenergebnis und das zweite Zwischenergebnisses addiert; und

    es sich bei der Ausgabe der parallelisierten Operationen um das Ergebnis der maskierten Verschiebe-Addier-Operation für die zwei oder die mehreren Eingabewerte handelt.

6. System, das aufweist:

    einen Satz von Registern (12); und

    eine oder mehrere Verarbeitungseinheiten (1501), die mit dem Satz von Registern (12) verbunden sind, wobei die eine oder die mehreren Verarbeitungseinheiten (1501) zum Durchführen eines Verfahrens konfiguriert sind, um eine maskierte Verschiebe-Addier-Operation auf einem Satz von Operanden durchzuführen, wobei das Durchführen der maskierten Verschiebe-Addier-Operation aufweist:

        Durchführen einer logischen AND-Operation auf einem ersten Paar von Operanden aus dem Satz von Operanden zum Erhalten eines ersten Zwischenergebnisses;

        Verschieben des ersten Zwischenergebnisses um einen ersten Verschiebungsbetrag, der auf einem ersten Operanden aus dem ersten Paar von Operanden beruht;

        **gekennzeichnet durch**

        Durchführen einer logischen AND-Operation auf einem zweiten Paar von Operanden aus dem Satz von Operanden zum Erhalten eines zweiten Zwischenergebnisses;

        Verschieben des zweiten Zwischenergebnisses um einen zweiten Verschiebungsbetrag, der auf einem ersten Operanden aus dem zweiten Paar von Operanden beruht;

        Addieren des verschobenen ersten Zwischenergebnisses und des verschobenen zweiten Zwischenergebnisses; und

        Ausgeben einer Ausgabe des Addierens als ein Ergebnis der maskierten Verschiebe-Addier-Funktion.

7. System nach Anspruch 6, wobei es sich bei dem ersten Verschiebungsbetrag um einen Index eines ersten von null verschiedenen Bit in dem ersten Operanden aus dem ersten Paar von Operanden handelt und/oder wobei das Verschieben des ersten Zwischenergebnisses um den ersten Verschiebungsbetrag ein Null-Padding des ersten Zwischenergebnisses um den ersten Verschiebungsbetrag aufweist.

8. System nach einem der Ansprüche 6 bis 7, wobei das Verschieben des zweiten Zwischenergebnisses um den zweiten Verschiebungsbetrag ein Null-Padding des zweiten Zwischenergebnisses um den zweiten Verschiebungsbetrag aufweist.

9.  System nach einem der Ansprüche 6 bis 8, das ferner das Aktualisieren einer Übertrag-Markierung (401) auf der Grundlage eines Übertrags aufweist, der aus dem Addieren des verschobenen ersten Zwischenergebnisses und des verschobenen zweiten Zwischenergebnisses resultiert, wobei die Übertrag-Markierung (401) auf der Grundlage einer Anweisung aktualisiert wird, die zum Durchführen der maskierten Verschiebe-Addier-Operation empfangen wird.

10. System nach einem der Ansprüche 6 bis 9, wobei der Satz von Operanden in dem Satz von Registern (12) bereitgestellt wird.

11. Computer-Programmprodukt, das ein computerlesbares Speichermedium aufweist, das für einen Computer ausführbare Anweisungen speichert, wobei die durch einen Computer ausführbaren Anweisungen, wenn sie durch einen Prozessor (10) ausgeführt werden, den Prozessor (10) zum Durchführen eines Verfahrens veranlassen, um eine arithmetische Operation unter Verwenden von maskierten Verschiebe-Addier-Operationen parallel durchzuführen, wobei das Durchführen jeder maskierten Verschiebe-Addier-Operation auf einem Satz von Operanden aufweist:

    Empfangen einer Anweisung zum Durchführen einer maskierten Verschiebe-Addier-Operation mit einem Satz von Operanden;
    Durchführen einer logischen AND-Operation auf einem ersten Paar von Operanden aus dem Satz von Operanden zum Erhalten eines ersten Zwischenergebnisses;
    Verschieben des ersten Zwischenergebnisses um einen ersten Verschiebungsbetrag, der auf einem ersten Operanden aus dem ersten Paar von Operanden beruht;
    **gekennzeichnet durch**
    Durchführen einer logischen AND-Operation auf einem zweiten Paar von Operanden aus dem Satz von Operanden zum Erhalten eines zweiten Zwischenergebnisses;
    Verschieben des zweiten Zwischenergebnisses um einen zweiten Verschiebungsbetrag, der auf einem ersten Operanden aus dem zweiten Paar von Operanden beruht;
    Addieren des verschobenen ersten Zwischenergebnisses und des verschobenen zweiten Zwischenergebnisses; und
    Ausgeben einer Ausgabe des Addierens als ein Ergebnis der maskierten Verschiebe-Addier-Operation.

12. Computerprozessor (10), der aufweist:

    einen Satz von Registern (12); und
    eine Anweisungs-Ausführungseinheit (603), die zum Ausführen einer maskierten Verschiebe-Addier-Operation auf einem Satz von Operanden konfiguriert ist, wobei die Ausführung aufweist:

        Durchführen einer logischen AND-Operation auf einem ersten Paar von Operanden zum Erhalten eines ersten Zwischenergebnisses;
        Verschieben des ersten Zwischenergebnisses um einen ersten Verschiebungsbetrag, der auf einem ersten Operanden aus dem ersten Paar von Operanden beruht;
        **gekennzeichnet durch**
        Durchführen einer logischen AND-Operation auf einem zweiten Paar von Operanden zum Erhalten eines zweiten Zwischenergebnisses;
        Verschieben des zweiten Zwischenergebnisses um einen zweiten Verschiebungsbetrag, der auf einem ersten Operanden aus dem zweiten Paar von Operanden beruht;
        Addieren des verschobenen ersten Zwischenergebnisses und des verschobenen zweiten Zwischenergebnisses; und
        Ausgeben einer Ausgabe des Addierens als ein Ergebnis der maskierten Verschiebe-Addier-Operation.

13. Computerprozessor (10) nach Anspruch 12, wobei das erste Paar von Operanden und das zweite Paar von Operanden parallel verarbeitet und/oder wobei die Operanden in dem Satz von Registern (12) bereitgestellt werden.

14. Computerrealisiertes Verfahren für eine arithmetische Operation, wobei das Verfahren aufweist:
    Trennen von zwei Eingabewerten der arithmetischen Operation in getrennte Abschnitte durch eine Verarbeitungseinheit (1501) und paralleles Durchführen einer maskierten Verschiebe-Addier-Operation unter Verwenden der zwei zugehörigen Abschnitte aus den zwei Eingabewerten als Teil eines Satzes von Operanden der maskierten Verschiebe-Addier-Operation, wobei das Durchführen jeder maskierten Verschiebe-Addier-Operation aufweist:

Durchführen einer logischen AND-Operation auf einem ersten Paar von Operanden zum Erhalten eines ersten Zwischenergebnisses;

Verschieben des ersten Zwischenergebnisses um einen ersten Verschiebungsbetrag, der auf einem ersten Operanden aus dem ersten Paar von Operanden beruht;

**gekennzeichnet durch**

Durchführen einer logischen AND-Operation auf einem zweiten Paar von Operanden zum Erhalten eines zweiten Zwischenergebnisses;

Verschieben des zweiten Zwischenergebnisses um einen zweiten Verschiebungsbetrag, der auf einem ersten Operanden aus dem zweiten Paar von Operanden beruht;

Addieren des verschobenen ersten Zwischenergebnisses und des verschobenen zweiten Zwischenergebnisses; und

Ausgeben einer Ausgabe des Addierens als ein Ergebnis der maskierten Verschiebe-Addier-Operation.

15. Computerrealisiertes Verfahren nach Anspruch 14, wobei das erste Paar von Operanden und das zweite Paar von Operanden parallel verarbeitet werden.

## Revendications

1. Procédé mis en œuvre par ordinateur comprenant :

la réception, par une unité de traitement (1501), d'une instruction d'exécution d'une opération d'addition par décalage masqué avec un ensemble d'opérandes ;

l'exécution d'une opération ET logique sur une première paire d'opérandes de l'ensemble d'opérandes pour obtenir un premier résultat intermédiaire ;

le décalage du premier résultat intermédiaire par une première quantité de décalage basée sur un premier opérande de la première paire d'opérandes ;

**caractérisé par**

l'exécution d'une opération ET logique sur une deuxième paire d'opérandes de l'ensemble d'opérandes pour obtenir un deuxième résultat intermédiaire ;

le décalage du deuxième résultat intermédiaire par une deuxième quantité de décalage basée sur un premier opérande de la deuxième paire d'opérandes ;

l'addition du premier résultat intermédiaire décalé et du deuxième résultat intermédiaire décalé ; et

l'émission, suite à l'opération d'addition par décalage masqué, d'une sortie de l'addition.

2. Procédé mis en œuvre par ordinateur selon la revendication 1, dans lequel la première quantité de décalage est un index d'un premier bit non nul dans le premier opérande de la première paire d'opérandes et/ou, dans lequel le décalage du premier résultat intermédiaire par la première quantité de décalage comprend le remplissage par zéros du premier résultat intermédiaire par la première quantité de décalage.

3. Procédé mis en œuvre par ordinateur selon une quelconque des revendications précédentes, dans lequel le décalage du deuxième résultat intermédiaire par la deuxième quantité de décalage comprend le remplissage par zéros du deuxième résultat intermédiaire par la deuxième quantité de décalage.

4. Procédé mis en œuvre par ordinateur selon une quelconque des revendications précédentes, comprenant en outre la mise à jour d'un indicateur de report (401) de l'unité de traitement (1501) sur la base d'un report résultant de l'addition du premier résultat intermédiaire décalé et du deuxième résultat intermédiaire décalé, dans lequel l'indicateur de report (401) est mis à jour sur la base de l'instruction reçue pour effectuer l'opération d'addition par décalage masqué.

5. Procédé mis en œuvre par ordinateur selon une quelconque des revendications précédentes, dans lequel :

l'unité de traitement (1501) effectue, en parallèle, pour deux ou plusieurs valeurs d'entrée, le décalage du premier résultat intermédiaire et du deuxième résultat intermédiaire et l'addition du premier résultat intermédiaire décalé et du deuxième résultat intermédiaire ; et

la sortie des opérations parallélisées est le résultat de l'opération d'addition par décalage masqué pour les deux ou plusieurs valeurs d'entrée.

6. Système comprenant :

un ensemble de registres (12) ; et

une ou plusieurs unités de traitement (1501) couplées à l'ensemble de registres (12), la ou les plusieurs unités de traitement (1501) sont configurées pour exécuter un procédé d'addition par décalage masqué sur un ensemble d'opérandes, dans lequel l'exécution de l'opération d'addition par décalage masqué comprend :

l'exécution d'une opération ET logique sur une première paire d'opérandes de l'ensemble pour obtenir un premier résultat intermédiaire ;

le décalage du premier résultat intermédiaire par une première quantité de décalage qui est basée sur un premier opérande de la première paire d'opérandes ;

**caractérisé par**

l'exécution d'une opération ET logique sur une deuxième paire d'opérandes de l'ensemble pour obtenir un deuxième résultat intermédiaire ;

le décalage du deuxième résultat intermédiaire par une deuxième quantité de décalage basée sur un premier opérande de la deuxième paire d'opérandes ;

l'addition du premier résultat intermédiaire décalé et du deuxième résultat intermédiaire décalé ; et

l'émission, suite à l'opération d'addition par décalage masqué, d'une sortie de l'addition.

**7.** Système selon la revendication 6, dans lequel la première quantité de décalage est un index d'un premier bit non nul dans le premier opérande de la première paire d'opérandes et/ou dans lequel le décalage du premier résultat intermédiaire par la première quantité de décalage comprend le remplissage par zéros du premier résultat intermédiaire par la première quantité de décalage.

**8.** Système selon une quelconque des revendications 6 à 7, dans lequel le décalage du deuxième résultat intermédiaire par la deuxième quantité de décalage comprend le remplissage par zéros du deuxième résultat intermédiaire par la deuxième quantité de décalage.

**9.** Système selon une quelconque des revendications 6 à 8, comprenant en outre la mise à jour d'un indicateur de report (401) sur la base d'un report résultant de l'addition du premier résultat intermédiaire décalé et du deuxième résultat intermédiaire décalé, dans lequel l'indicateur de report (401) est mis à jour sur la base d'une instruction reçue pour effectuer l'opération d'addition par décalage masqué.

**10.** Système selon une quelconque des revendications 6 à 9, dans lequel l'ensemble d'opérandes est fourni dans l'ensemble de registres (12).

**11.** Produit de programme informatique comprenant une mémoire lisible par ordinateur sur laquelle sont mémorisées des instructions exécutables par ordinateur, les instructions exécutables par ordinateur, lorsqu'elles sont exécutées par un processeur (10), amènent le processeur (10) à exécuter un procédé pour l'exécution d'une opération arithmétique utilisant des opérations d'addition par décalage masqué en parallèle, dans lequel l'exécution de chaque opération d'addition par décalage masqué sur un ensemble d'opérandes comprend :

la réception d'une instruction pour exécuter une opération d'addition par décalage masqué avec un ensemble d'opérandes ;

l'exécution d'une opération ET logique sur une première paire d'opérandes de l'ensemble pour obtenir un premier résultat intermédiaire ;

le décalage du premier résultat intermédiaire par une première quantité de décalage basée sur un premier opérande de la première paire d'opérandes ;

**caractérisé par**

l'exécution d'une opération ET logique sur une deuxième paire d'opérandes de l'ensemble pour obtenir un deuxième résultat intermédiaire ;

le décalage du deuxième résultat intermédiaire par une deuxième quantité de décalage basée sur un premier opérande de la deuxième paire d'opérandes ;

l'addition du premier résultat intermédiaire décalé et du deuxième résultat intermédiaire décalé ; et

l'émission, suite à l'opération d'addition masquée, d'une sortie de l'addition.

**12.** Processeur informatique (10) comprenant :

un ensemble de registres (12) ; et

une unité d'exécution d'instructions (603) configurée pour exécuter une instruction d'addition par décalage masqué sur un ensemble d'opérandes, l'exécution comprenant :

l'exécution d'une opération **ET** logique sur une première paire d'opérandes pour obtenir un premier résultat intermédiaire ;

le décalage du premier résultat intermédiaire par une première quantité de décalage basée sur un premier opérande de la première paire d'opérandes ;

**caractérisé par**

l'exécution d'une opération ET logique sur une deuxième paire d'opérandes pour obtenir un deuxième résultat intermédiaire ;

le décalage du deuxième résultat intermédiaire par une deuxième quantité de décalage basée sur un premier opérande de la deuxième paire d'opérandes ;

l'addition du premier résultat intermédiaire décalé et du deuxième résultat intermédiaire décalé ; et

l'émission, suite à l'opération d'addition par décalage masqué, d'une sortie de l'addition.

13. Processeur informatique (10) selon la revendication 12, dans lequel la première paire d'opérandes et la deuxième paire d'opérandes sont traitées en parallèle et/ou dans lequel les opérandes sont fournis dans l'ensemble de registres (12).

14. Procédé informatique pour une opération arithmétique, le procédé comprenant :

la division, par une unité de traitement (1501), de deux valeurs d'entrée de l'opération arithmétique en portions distinctes et l'exécution, en parallèle, d'une opération d'addition par décalage masqué avec deux portions correspondantes des deux valeurs d'entrée étant utilisées comme partie d'un ensemble d'opérandes de l'opération d'addition par décalage masqué, dans l'exécution de chaque opération d'addition par décalage masqué comprend :

l'exécution d'une opération ET logique sur une première paire d'opérandes pour obtenir un premier résultat intermédiaire ;

le décalage du premier résultat intermédiaire par une première quantité de décalage basée sur un premier opérande de la première paire d'opérandes ;

**caractérisé par**

l'exécution d'une opération ET logique sur une deuxième paire d'opérandes pour obtenir un deuxième résultat intermédiaire ;

le décalage du deuxième résultat intermédiaire par une deuxième quantité de décalage basée sur un premier opérande de la deuxième paire d'opérandes ;

l'addition du premier résultat intermédiaire décalé et du deuxième résultat intermédiaire décalé ; et

l'émission, suite à l'opération d'addition par décalage masqué, d'une sortie de l'addition.

15. Procédé mis en œuvre par ordinateur selon la revendication 14, dans lequel la première paire d'opérandes et la deuxième paire d'opérandes sont traitées en parallèle.

FIG. 1

MASKED SHIFTED ADD OPERATION 100

↓

READ IN FIRST AND THIRD OPERANDS 101

↓

PERFORM A LOGICAL AND OPERATION ON THE FIRST AND THIRD OPERAND TO GIVE AN INTERMEDIATE RESULT 102

↓

DETERMINE SHIFT AMOUNT WITH THE THIRD OPERAND 103

↓

PERFORM A SHIFT OPERATION ON INTERMEDIATE RESULT (102) BY THE SHIFT AMOUNT (103) AND ZERO PAD TO GET AN INTERMEDIATE RESULT 104

↓

READ IN SECOND AND FOURTH OPERANDS 105

↓

PERFORM A LOGICAL AND OPERATION ON THE SECOND AND FOURTH OPERAND TO GIVE AN INTERMEDIATE RESULT 106

↓

DETERMINE SHIFT AMOUNT WITH THE FOURTH OPERAND (FIGURE 2) 107

↓

PERFORM A SHIFT OPERATION ON INTERMEDIATE RESULT (106) BY THE SHIFT AMOUNT (107) AND ZERO PAD TO GET AN INTERMEDIATE RESULT 108

↓

ADD TOGETHER THE INTERMEDIATE RESULTS (OF 104 AND 108) 109

↓

STORE THE RESULT OF 109 IN THE FIFTH OPERAND LOCATION 110

↓

CONDITIONALLY UPDATE THE CARRY FLAG OF THE PROCESSOR DEPENDING ON THE CARRY FROM OPERATION TO ADD THE INTERMEDIATE RESULTS (109) 111

FIG. 2

SCAN THE OPERAND BIT-WISE STARTING FROM THE LEAST SIGNIFICANT BIT TO THE MOST SIGNIFICANT BIT 201

CHECK IF THE BIT IS NON-ZERO 202

NO

YES

RETURN THE INDEX OF THE BIT 203

FIG. 3

FIG. 4

**With w = 64, ρ = 56**

0:111    flat_pp[0]

c   56:167    flat_pp[1]

c   112:224    flat_pp[2]

168:279    flat_pp[3]

12

**State of the Art**

**With w = 64, ρ = 54**

c   0:107    flat_pp[0]

c   54:161    flat_pp[1]

c   108:215    flat_pp[2]

c   162:269    flat_pp[3]

12

**Masked Shift Add**

EP 4 388 410 B1

FIG. 5

COMPUTER PROCESSOR

FIG. 6

1500

Mass Storage 1510

Software 1511          Hard Disk 1508

I/O Adapter 1506

System Memory 1503

RAM 1505

ROM 1504

CPU 1501a
CPU 1501b
CPU 1501c

Communications Adapter 1507

Network 1512

System Bus 1502

Interface Adapter 1516

Keyboard 1521

Mouse 1522

Speaker 1523

Display Adapter 1515

Display 1519

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5909552 A